# EUROPEAN PATENT APPLICATION

(11) **EP 4 738 500 A1**
(43) Date of publication of application: **06.05.2026**
(21) Application number: 25207643.5
(22) Date of filing: 09.10.2025
(51) Int. Cl.: H01M 10/04, H01M 4/04, H01M 10/0583, H01M 50/46

(54) **APPARATUS FOR MANUFACTURING ELECTRODE ASSEMBLY AND METHOD FOR MANUFACTURING ELECTRODE ASSEMBLY**

(30) Priority: 05.11.2024 KR 20240155009
(71) Applicant: SAMSUNG SDI CO., LTD., Yongin-si, Gyeonggi-do 17084 (KR)
(72) Inventor: LEE, Sun Woo, Yongin-Si, Gyeonggi-do 17084 (KR)
(74) Representative: Gulde & Partner

(57) **Abstract**

An apparatus for manufacturing an electrode assembly may include a base frame, a stack table disposed on the base frame, a separator supply device configured to supply a separator in a zigzag configuration to the stack table, the separator supply device configured to reciprocate in a horizontal direction relative to the base frame, the separator comprising an adhesive layer, a first electrode supply device configured to dispose a first electrode on the separator while moving in a first direction, a second electrode supply device configured to dispose a second electrode on the separator while moving in a second direction opposite to the first direction, and a heating device configured to heat the separator to activate the adhesive layer such that the separator adheres to the first electrode or the second electrode.

## Description

### BACKGROUND

### Field

The present disclosure relates to an apparatus for manufacturing an electrode assembly and a method for manufacturing the electrode assembly.

### Description of the Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

The electrode assembly may be configured with a separator disposed between positive and negative plates. The electrode assembly may be manufactured by alternately supplying the positive plate and the negative plate in opposite directions with the separator therebetween while stacking the separator in a zigzag shape. In this manner, the electrode assembly is manufactured in a Z-stack shape, and the stacked structure including the separator, the positive plate, and the negative plate, may become distorted or collapsed.

The information disclosed in this Background section is for enhancement of understanding of the background of the present disclosure. The section may contain information that does not constitute related (or prior) art.

### SUMMARY

Embodiments of the present disclosure provide an apparatus for manufacturing an electrode assembly and a method for manufacturing the electrode assembly.

According to one or more embodiments of the present disclosure, an apparatus for manufacturing an electrode assembly may include a base frame, a stack table on the base frame, a separator supply device that supplies a separator including an adhesive layer in a zigzag shape to the stack table while reciprocating in a horizontal direction, a first electrode supply device that disposes a first electrode on the separator disposed by the separator supply device moving in a first direction, a second electrode supply device that disposes a second electrode on the separator disposed by the separator supply device moving in a second direction opposite to the first direction, and a heating device that heats the separator such that the separator may be adhered to at least one of the first electrode and the second electrode while the adhesive layer may be melted.

Embodiments of the present disclosure provide an apparatus for manufacturing an electrode assembly including: a base frame; a stack table disposed on the base frame; a separator supply device configured to supply a separator in a zigzag configuration to the stack table, the separator supply device configured to reciprocate in a horizontal direction relative to the base frame, the separator including an adhesive layer; a first electrode supply device configured to dispose a first electrode on the separator while moving in a first direction; a second electrode supply device configured to dispose a second electrode on the separator while moving in a second direction opposite to the first direction; and a heating device configured to heat the separator to activate the adhesive layer such that the separator adheres to the first electrode or the second electrode.

In some embodiments, the heating device may include a heating wire heater disposed on the base frame. In some aspects, the heating wire heater heats the stack table.

In some embodiments, the heating device includes a heating wire heater disposed on or embedded in the base frame.

In some embodiments, the heating device may include a high-frequency induction heating device disposed on the base frame. In some aspects, the high-frequency induction heating device heats the stack table by induction heating.

In some embodiments, the heating device includes a high-frequency induction heating device disposed on the base frame.

In some embodiments, the heating device may include an infrared lamp disposed on the base frame. In some aspects, the infrared lamp emits light to the stack table to heat the stack table.

In some embodiments, the heating device includes an infrared lamp disposed on the base frame.

In some embodiments, the stack table may include a light transmitting portion that may be formed of a transparent material to allow the light emitted from the infrared lamp to pass through.

In some embodiments, the stack table includes an infrared transmitting portion comprising an infrared-transparent material.

In some embodiments, the separator supply device may include a supply frame disposed on the base frame. In some embodiments, the separator supply device may include a separator supply roller that supplies the separator to the supply frame. In some embodiments, the separator supply device may include a support roller rotatably disposed on the supply frame. In some aspects, the support roller supports movement of the separator. In some embodiments, the separator supply device may include a moving frame disposed on the supply frame. In some aspect, the moving frame reciprocates in the horizontal direction with respect to the base frame. In some embodiments, the separator supply device may include a nip roller disposed on the moving frame. In some aspects, the nip roller moves the separator. In some embodiments, the separator supply device may include a guide roller rotatably disposed on the moving frame. In some aspects, the guide roller supplies the separator supplied from the nip roller to the stack table.

In some embodiments, the separator supply device includes a supply frame. The supply frame may be disposed above the base frame. In some embodiments, the separator supply device includes a separator supply roller configured to supply the separator to the supply frame. In some embodiments, the separator supply device includes a support roller disposed on the supply frame and configured to support movement of the separator. In some embodiments, the separator supply device includes a moving frame configured to reciprocate in the horizontal direction with respect to the base frame. In some embodiments, the separator supply device includes a nip roller disposed on the moving frame. In some aspects, the nip roller may be configured to move the separator. In some embodiments, the separator supply device includes a guide roller disposed on the moving frame. In some aspects, the guide roller may be configured to supply the separator from the nip roller to the stack table.

In some embodiments, the heating device may include an infrared lamp disposed on the moving frame. In some aspects, the infrared lamp heats the separator which may be on the stack table by emitting light to the separator.

In some embodiments, the heating device includes an infrared lamp disposed on the moving frame.

In some embodiments, the heating device may include a first infrared lamp disposed on one side (e.g., a first side) of the moving frame, and a second infrared lamp disposed on another side (e.g., a second side opposite the first side) of the moving frame.

In some embodiments, the heating device may include a plurality of infrared lamps disposed on moving frame and configured to heat the separator.

In some embodiments, the first infrared lamp operates to emit light to the separator when the moving frame moves in the first direction. In some embodiments, the first infrared lamp operates to emit light to the separator after the moving frame has been moved in the first direction.

In some embodiments, the first infrared lamp emits infrared radiation to the separator when the moving frame moves in the first direction. In some embodiments, the first infrared lamp emits infrared radiation to the separator after the moving frame has been moved in the first direction.

In some embodiments, the second infrared lamp operates to emit light to the separator when the moving frame moves in the second direction. In some embodiments, the second infrared lamp operates to emit light to the separator after the moving frame has been moved in the second direction

In some embodiments, the second infrared lamp emits infrared radiation to the separator when the moving frame moves in the second direction. In some embodiments, the second infrared lamp emits infrared radiation to the separator after the moving frame has been moved in the second direction.

In some embodiments, the heating device may include a heating wire heater disposed on the guide roller. In some aspects, the heating wire heater heats the guide roller.

In some embodiments, the heating device includes a heating wire heater disposed on the guide roller.

According to one or more embodiments of the present disclosure, a method for manufacturing an electrode assembly may include disposing a separator including an adhesive layer in a zigzag shape on a stack table on a base frame while a separator supply device reciprocates in a horizontal direction, alternately disposing a first electrode and a second electrode on the separator, and heating the separator such that the separator may be adhered to at least one of the first electrode and the second electrode while the adhesive layer may be melted.

Embodiments of the present disclosure provide a method for manufacturing an electrode assembly, including: disposing a separator in a zigzag configuration on a stack table on a base frame while a separator supply device reciprocates in a horizontal direction relative to the base frame, the separator including an adhesive layer; alternately disposing a first electrode and a second electrode on the separator; and heating the separator to activate the adhesive layer such that the separator adheres to the first electrode or the second electrode.

In some embodiments, alternately disposing the first electrode and the second electrode may include disposing the first electrode on the separator disposed by the separator supply device moving in a first direction, and disposing the second electrode on the separator disposed by the separator supply device moving in a second direction opposite to the first direction.

In some embodiments, the alternately disposing includes: disposing the first electrode on the separator while the separator supply device moves in a first direction; and disposing the second electrode on the separator while the separator supply device moves in a second direction opposite to the first direction. In some embodiments, the alternately disposing includes: disposing the first electrode on the separator after the separator supply device has been moved in a first direction; and disposing the second electrode on the separator after the separator supply device has been moved in a second direction opposite to the first direction.

In some embodiments, heating the separator may include heating the stack table - for example - by operating a heating wire heater disposed on the base frame.

In some embodiments, the heating includes heating the stack table - for example - by operating a heating wire heater disposed on the base frame.

In some embodiments, heating the separator may include heating the stack table - for example - by operating a high-frequency induction heating device disposed on the base frame.

In some embodiments, the heating includes heating the stack table - for example - by operating a high-frequency induction heating device disposed on the base frame.

In some embodiments, heating the separator may include heating the stack table by emitting light to the stack table - for example - by operating an infrared lamp disposed on the base frame.

In some embodiments, the heating includes heating the stack table by emitting infrared radiation to the stack table - for example - by operating an infrared lamp disposed on the base frame.

In some embodiments, the separator supply device may include a supply frame on the base frame. In some embodiments, the separator supply device may include a separator supply roller that supplies the separator to the supply frame. In some embodiments, the separator supply device may include a support roller rotatably disposed on the supply frame. In some aspects, the support roller supports movement of the separator. In some embodiments, the separator supply device may include a moving frame disposed on the supply frame. In some aspects, the moving frame reciprocates in a horizontal direction with respect to the base frame. In some embodiments, the separator supply device may include a nip roller disposed on the moving frame. In some aspects, the nip roller moves the separator. In some embodiments, the separator supply device may include a guide roller rotatably disposed on the moving frame. In some aspects, the guide roller supplies the separator supplied from the nip roller to the stack table.

In some embodiments, the separator supply device includes a supply frame disposed above the base frame. In some embodiments, the separator supply device includes a separator supply roller configured to supply the separator to the supply frame. In some embodiments, the separator supply device includes a support roller disposed on the supply frame and configured to support movement of the separator. In some embodiments, the separator supply device includes a moving frame configured to reciprocate in the horizontal direction with respect to the base frame. In some embodiments, the separator supply device includes a nip roller disposed on the moving frame and configured to move the separator. In some embodiments, the separator supply device includes a guide roller disposed on the moving frame and configured to supply the separator from the nip roller to the stack table.

In some embodiments, heating the separator may include heating the separator on the stack table by emitting light to the separator - for example - by operating the infrared lamp disposed on the moving frame.

In some embodiments, the heating includes heating the separator on the stack table by emitting infrared radiation to the separator - for example - by operating the infrared lamp disposed on the moving frame.

In some embodiments, heating the separator may include emitting light to the separator - for example - by operating a first infrared lamp on one side of the moving frame when the moving frame moves in the first direction, and emitting light to the separator - for example - by operating a first infrared lamp on the other side of the moving frame when the moving frame moves in a second direction opposite to the first direction.

In some embodiments, the heating includes: emitting infrared radiation to the separator - for example - by operating a first infrared lamp disposed on one side of the moving frame when the moving frame moves in the first direction; and emitting infrared radiation to the separator - for example - by operating a second infrared lamp on the other side of the moving frame when the moving frame moves in a second direction opposite to the first direction.

In some embodiments, heating the separator may include heating the guide roller - for example - by operating a heating wire heater on the guide roller.

In some embodiments, the heating includes heating the guide roller - for example - by operating a heating wire heater disposed on the guide roller.

According to some embodiments of the present invention, an apparatus for manufacturing an electrode assembly may dispose a separator in a zigzag shape between the first electrode and the second electrode, and heat the separator to bond the separator to at least one of the first electrode and the second electrode.

According to some embodiments of the present invention, the separator is adhered to at least one of the first electrode and the second electrode, so that the stacked state may be maintained in an aligned state without being distorted or collapsed.

According to some embodiments, an apparatus for manufacturing an electrode assembly may include a separator supply device configured to supply a separator to a stack table, the separator supply device configured to allow for a movement relative to the base frame. The apparatus may further include a first electrode supply device configured to dispose a first electrode on the separator (e.g., based on a relative movement in a first direction); a second electrode supply device configured to dispose a second electrode on the separator (e.g., based on a relative movement in a second direction opposite to the first direction. The apparatus may further include a heating device configured to heat the separator to activate an adhesive layer of the separator such that the separator can adhere to the first electrode and/or the second electrode.

Some aspects relate to a separator supply device for disposing a separator alternatingly between electrodes, the separator supply device may include: a supply frame, a separator supply roller configured to supply the separator to the supply frame; a support roller disposed on the supply frame and configured to support movement of the separator; a moving frame configured to allow for a reciprocate movement; a nip roller disposed on the moving frame and configured to move the separator; and a guide roller disposed on the moving frame and configured to supply the separator from the nip roller to a stack table.

As described herein in various aspects, some parts of the apparatus for manufacturing the electrode assembly may be disposed on other parts thereof. In this regard, the term "disposed on" may be understood as any suitable configuration such as "attached to", "embedded partially in", "embedded completely in", "mounted over", "mounted in", only as examples.

Various aspects described herein are related to an apparatus for manufacturing an electrode assembly, wherein it is understood that any configuration and/or function of the apparatus can be aspects of a method for manufacturing the electrode assembly. In the same way, it is understood that any aspect of a method for manufacturing the electrode assembly can be a configuration and/or a function of the apparatus.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 shows an apparatus for manufacturing an electrode assembly according to one or more embodiments of the present disclosure.
FIG. 2 shows a heating device in the apparatus for manufacturing an electrode assembly according to one or more embodiments of the present disclosure.
FIG. 3 shows the heating device in the apparatus for manufacturing an electrode assembly according to one or more embodiments of the present disclosure.
FIG. 4 shows the heating device in the apparatus for manufacturing an electrode assembly according to one or more embodiments of the present disclosure.
FIG. 5 shows the heating device in the apparatus for manufacturing an electrode assembly according to one or more embodiments of the present disclosure.
FIG. 6 shows operation of the heating device shown in FIG. 5 of the apparatus for manufacturing an electrode assembly according to one or more embodiments of the present disclosure.
FIG. 7 shows operation of the heating device shown in FIG. 5 of the apparatus for manufacturing an electrode assembly according to one or more embodiments of the present disclosure.
FIG. 8 shows the heating device in the apparatus for manufacturing an electrode assembly according to one or more embodiments of the present disclosure.
FIG. 9 shows the heating device shown in FIG. 2 and the heating device shown in FIG. 5 configured together in the apparatus for manufacturing an electrode assembly according to one or more embodiments of the present disclosure.
FIG. 10 shows the heating device shown in FIG. 2 and the heating device shown in FIG. 8 configured together in the apparatus for manufacturing an electrode assembly according to one or more embodiments of the present disclosure.
FIG. 11 is a flowchart showing a method for manufacturing an electrode assembly according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Therefore, the embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

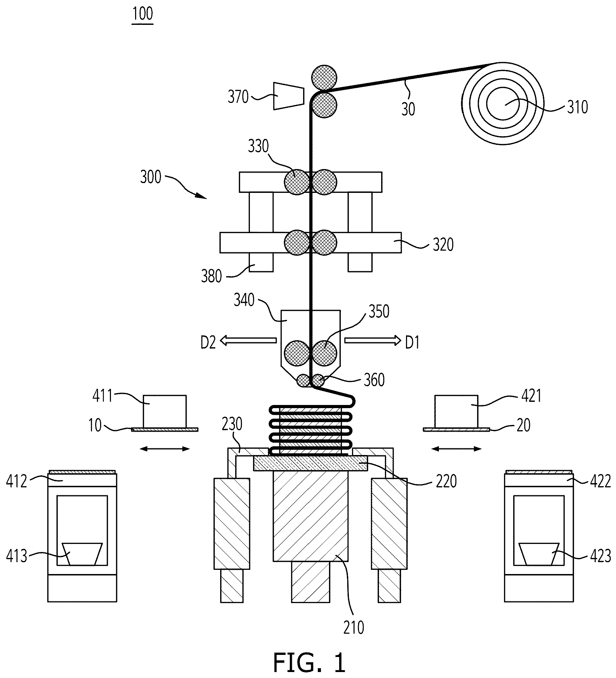

FIG. 1 shows an apparatus 100 for manufacturing an electrode assembly according to one or more embodiments of the present disclosure.

An apparatus 100 for manufacturing an electrode assembly may include a base frame 210, a stack table 220 disposed on the base frame 210, a separator supply device 300 that supplies a separator 30, including an adhesive layer, to the stack table 220 in a zigzag configuration while reciprocating in a horizontal direction relative to a ground, a first electrode supply device 411 that disposes a first electrode 10 on the separator 30 disposed by the separator supply device 300 moving in a first direction D1, and a second electrode supply device 421 that disposes a second electrode 20 on the separator 30 disposed by the separator supply device 300 moving in a second direction D2 opposite to the first direction D1.

The stack table 220 may be formed of a substantially rectangular plate and may be disposed on the base frame 210. The separator 30, the first electrode 10, and the second electrode 20 may be stacked on the stack table 220 to form an electrode assembly. The separator 30 is supplied in a zigzag configuration and is disposed on the stack table 220, and the first electrode 10 and the second electrode 20 are supplied in opposite directions with respect to the separator 30, so that the first electrode 10 and the second electrode 20 may be alternately stacked having the separator 30 disposed therebetween. The stack table 220 may have an area larger than the area of the separator 30 such that the separator 30, the first electrode 10, and the second electrode 20 may be stacked is a consistent manner.

A grip device 230 may be utilized to prevent the stack table 220 from moving while being disposed on the base frame 210. In some embodiments, a pair of grip devices 230 may be utilized and disposed on both sides of the stack table 220. The pair of grip devices 230 may, from top to bottom, press the upper side of both ends of the stack table 220 to fix the stack table 220 such that it does not move. The grip device 230 is not limited to such a configuration, and any configuration may be applied as long as it may fix the stack table 220 avoiding the stack table 220 to move.

The separator supply device 300 may be disposed above the stack table 220 and configured to supply the separator 30 to the stack table 220 in a zigzag configuration while reciprocating in a horizontal direction relative to a ground.

In some embodiments, the separator supply device 300 may include a supply frame 320 disposed above the base frame 210, a separator supply roller 310 that rotatably supplies a separator 30 to the supply frame 320, a support roller 330 that is rotatably disposed on the supply frame 320 and configured to support movement of the separator 30, a moving frame 340 that is disposed on the supply frame 320 and reciprocates in a horizontal direction with respect to the base frame 210, nip rollers 350 that are rotatably disposed on the moving frame 340 and configured to move the separator 30, and guide rollers 360 that are rotatably disposed on the moving frame 340 and configured to supply the separator 30 from the nip rollers 350 to the stack table 220.

The separator 30 is wound around the separator supply roller 310, and as the nip rollers 350 rotate, the separator 30 wound around the separator supply roller 310 moves so that the separator 30 may be supplied to the stack table 220. In some embodiments, a pair of the nip rollers 350 may be provided to pressurize both sides of the separator 30. The rotation of the nip rollers 350 may be driven by a driving motor.

The separator supply device 300 may include a transport control device 370, which adjusts the separator 30 supplied from the separator supply roller 310 to the nip rollers 350 to move without being distorted. In some embodiments, the transport control device 370 may be, but is not limited to, an Edge Position Controller (EPC) or a Line Position Controller (LPC) sensor.

The moving frame 340 may be disposed on the supply frame 320 and may be configured to reciprocate in a horizontal direction with respect to the base frame 210 to supply the separator 30 supplied through the guide roller 360 in a zigzag configuration on the stack table 220.

In some embodiments, the moving frame 340 is configured to slide along the supply frame 320, and the moving frame 340 may be configured to move in a linearly reciprocating manner by a driving device. Alternatively, the moving frame 340 may be rotatably coupled to the supply frame 320, and configured to reciprocally rotate at a predetermined angular range via a driving motor. The moving frame 340 is not limited to such a configuration, and any configuration may be applied as long as the separator 30 may be supplied in a zigzag configuration on the stack table 220.

The separator supply device 300 may include a separator stack sensor 380 that senses the separator 30 disposed on the supply frame 320 and stacked on the stack table 220. In some embodiments, a pair of the separator stack sensors 380 may be provided and may detect whether the separator 30 is stacked at a set position and size by measuring both ends of the stacked separator 30. The separator stack sensor 380 may be a vision sensor that determines the stacking state of the separator 30 by analyzing a captured video image. The separator stack sensor 380 is not limited to such a configuration, and any sensor may be applied as long as it may detect the stacking state of the separator 30.

In some embodiments, the position where the separator 30 is stacked is detected by the separator stack sensor 380, and when the separator 30 is out of the predetermined set position, the operation of the moving frame 340 may be reset such that the separator 30 is stacked at the predetermined set position.

The first electrode supply device 411 may be configured to dispose the first electrode 10 on the separator 30 disposed on the stack table 220 in the first direction D1 when the separator supply device 300 moves in the first direction D1 and disposes the separator 30 on the stack table 220. In some embodiments, the first electrode supply device 411 may be configured to transport the first electrode 10 to be disposed on the separator 30 after suctioning the first electrode 10 disposed on the first electrode alignment table 412 or attaching it by magnetic force using, such as, an electromagnet. The movement of the first electrode 10 is not limited to such a configuration, and various moving devices may be applied.

The first electrode 10, transported by the first electrode supply device 411, may be disposed on the first electrode alignment table 412. Additionally, the first electrode alignment table 412 may be equipped with a first electrode alignment sensor 413. In some embodiments, the first electrode alignment sensor 413 may be a vision sensor capable of identifying the arrangement state of the first electrode 10 disposed on the first electrode alignment table 412. The first electrode alignment sensor 413 is not limited to such a configuration, and any sensor may be applied as long as it may identify the arrangement state of the first electrode 10.

In some embodiments, the arrangement state of the first electrode 10 disposed on the first electrode alignment table 412 may be identified by the first electrode alignment sensor 413, and the operation of the first electrode supply device 411 may be adjusted such that the first electrode 10 is attached to the set position of the first electrode supply device 411.

The second electrode supply device 421 may be configured to dispose the second electrode 20 on the separator 30 disposed on the stack table 220 in the second direction D2 when the separator supply device 300 moves in the second direction D2 and disposes the separator 30 on the stack table 220. In some embodiments, the second electrode supply device 421 may be configured to transport the second electrode 20 to be disposed on the separator 30 after suctioning the second electrode 20 disposed on the second electrode alignment table 422 or attaching it by magnetic force using, such as, an electromagnet. The movement of the second electrode 20 is not limited to such a configuration, and various moving devices may be applied.

The second electrode 20, transported by the second electrode supply device 421, may be disposed on the second electrode alignment table 422. Additionally, a second electrode alignment sensor 423 may be provided on the second electrode alignment table 422. In some embodiments, the second electrode alignment sensor 423 may be a vision sensor capable of identifying the arrangement state of the second electrode 20 disposed on the second electrode alignment table 422. The second electrode alignment sensor 423 is not limited to such a configuration, and any sensor may be applied as long as it may identify the arrangement state of the second electrode 20.

In some embodiments, the arrangement state of the second electrode 20 disposed on the second electrode alignment table 422 may be identified through the second electrode alignment sensor 423, and the operation of the second electrode supply device 421 may be adjusted such that the second electrode 20 is attached to the set position of the second electrode supply device 421.

The heating device may be configured to heat the separator 30 such that the adhesive layer is melted and at least one of the first electrode 10 and the second electrode 20 is adhered to separator 30.

In some embodiments, the separator 30 may be a multi-layer coated separator (MCS) adhesive separator. The MCS adhesive separator may be coated both sides using a polyethylene fabric with a ceramic layer and coated both sides of the ceramic-coated separator with an adhesive layer. The adhesive layer may have no adhesive strength at room temperature, but when heated to an elevated temperature, the adhesive layer may melt and produce adhesive strength.

Therefore, the heating device heats the separator 30 to a certain temperature, and while the first electrode 10 and the second electrode 20 are stacked on the separator 30, at least one of the first electrode 10 and the second electrode 20 is bonded to the separator 30, so that the stacked state is maintained in an aligned state without being distorted or collapsed.

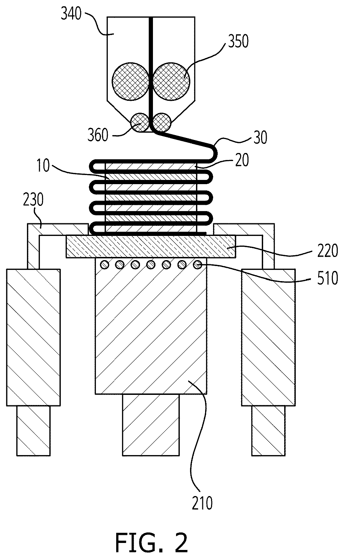

FIG. 2 shows a heating device in the apparatus for manufacturing an electrode assembly according to one or more embodiments of the present disclosure.

The heating device may be disposed on the base frame 210 and may include a heating wire heater 510 that may be embedded in the base frame 210 that heats the stack table 220. In some embodiments, the heating wire heater 510 may be configured such that a metal material such as copper, formed in a coil shape or a tube shape, generates heat when power is applied.

The stack table 220 may be configured to be heated by receiving heat from the heating wire heater 510. In some embodiments, the stack table 220 may include a metal material having high-thermal conductivity.

In this manner, the stack table 220 is heated to a constant temperature by the heating wire heater 510, the first electrode 10 and the second electrode 20 are stacked with the separator 30 disposed therebetween while the separator 30 is disposed in a zigzag configuration on the stack table 220, and the adhesive layer of the separator 30 melts by the heat of the stack table 220 and adheres to at least one of the first electrode 10 and the second electrode 20, thereby maintaining the stacked state.

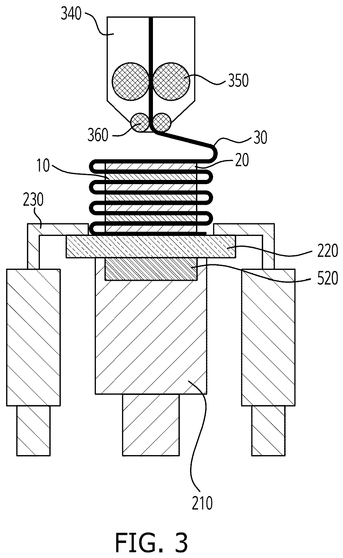

FIG. 3 shows the heating device in the apparatus for manufacturing an electrode assembly according to one or more embodiments of the present disclosure.

The heating device may include a high-frequency induction heating device 520 that is disposed on the base frame 210 and heats the stack table 220 by induction heating. In some embodiments, the stack table 220 may be configured to be heated by the high-frequency induction heating device 520.

In this manner, the stack table 220 is heated to a constant temperature by the high-frequency induction heating device 520, the first electrode 10 and the second electrode 20 are stacked with the separator 30 disposed therebetween while the separator 30 is disposed in a zigzag configuration on the stack table 220, and the adhesive layer of the separator 30 melts by the heat of the stack table 220 and adheres to at least one of the first electrode 10 and the second electrode 20, thereby maintaining the stacked state.

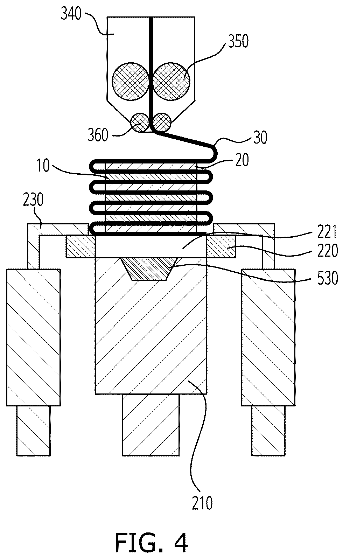

FIG. 4 shows the heating device in the apparatus for manufacturing an electrode assembly according to one or more embodiments of the present disclosure.

The heating device may include an infrared lamp 530 that is disposed on the base frame 210 and emits infrared radiation to the stack table 220 to heat the stack table 220. In some embodiments, the stack table 220 may be configured to be heated by the infrared lamp 530.

In this manner, the stack table 220 is heated to a constant temperature by the infrared lamp 530, the first electrode 10 and the second electrode 20 are stacked with the separator 30 disposed therebetween while the separator 30 is disposed in a zigzag configuration on the stack table 220, and the adhesive layer of the separator 30 melts by the heat of the stack table 220 and adheres to at least one of the first electrode 10 and the second electrode 20, thereby maintaining the stacked state.

In some embodiments, the stack table 220 may further include an infrared transmitting portion 221 including an infrared-transparent material to allow infrared radiation emitted from the infrared lamp 530 to be transmitted. The infrared transmitting portion 221 may include a transparent material such as glass or plastic.

In this manner, the first electrode 10 and the second electrode 20 are stacked with the separator 30 disposed therebetween while the separator 30 is disposed in a zigzag configuration on the stack table 220, the infrared radiation passing through the light transmitting portion 221 of the stack table 220 heats the separator 30, and the adhesive layer of the separator 30 melts and adheres to at least one of the first electrode 10 and the second electrode 20, thereby maintaining the stacked state.

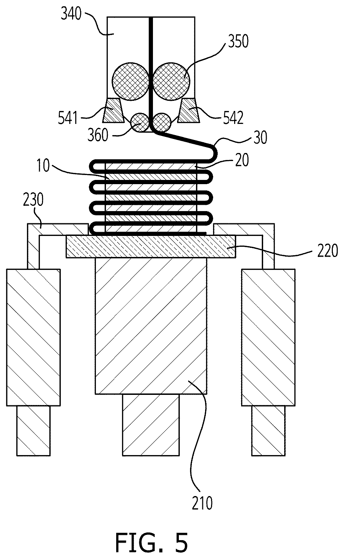

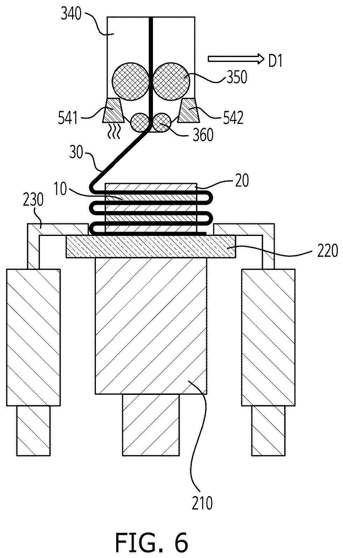

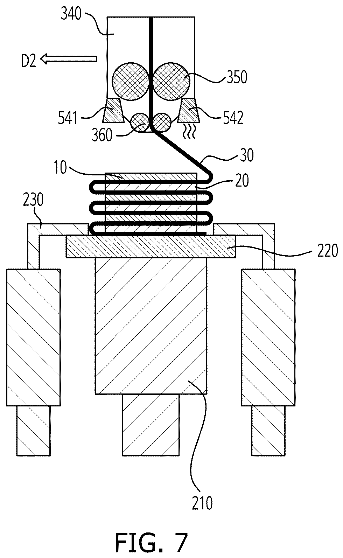

FIG. 5 shows the heating device in the apparatus for manufacturing an electrode assembly according to one or more embodiments of the present disclosure. FIG. 6 shows operation of the heating device shown in FIG. 5 of the apparatus for manufacturing an electrode assembly according to one or more embodiments of the present disclosure. FIG. 7 shows operation of the heating device shown in FIG. 5 of the apparatus for manufacturing an electrode assembly according to one or more embodiments of the present disclosure.

Referring to FIGS. 5 to 7, the heating device may include an infrared lamp that is disposed on the moving frame 340 and emits infrared radiation to heat the separator 30 disposed on the stack table 220. In some embodiments, the heating device may include a first infrared lamp 541 disposed on one side of the moving frame 340 and a second infrared lamp 542 disposed on the other side of the moving frame 340.

In this manner, while the separator 30 is supplied in a zigzag configuration on the stack table 220, the separator 30 is heated by the first infrared lamp 541 and the second infrared lamp 542 disposed on the moving frame 340, so that the adhesive layer of the separator 30 may melt. As the first electrode 10 and the second electrode 20 are stacked on the separator 30 with the melted adhesive layer, the first electrode 10 and the second electrode 20 may be stacked while being adhered to the separator 30.

In some embodiments, the first infrared lamp 541 may operate to emit infrared radiation to the separator 30 when the moving frame 340 moves in the first direction D1, and the second infrared lamp 542 may operate to emit light to the separator 30 when the moving frame 340 moves in the second direction D2.

Each of the first infrared lamp 541 and the second infrared lamp 542 may not continuously operate.

As shown in FIG. 6, when the moving frame 340 moves in the first direction D1, the first infrared lamp 541 operates to emit infrared radiation onto one side of the separator 30, thereby melting the adhesive layer formed on one side of the separator 30. When the first electrode 10 is disposed on one side of the separator 30, the one side of the separator 30 and the first electrode 10 may be bonded.

As shown in FIG. 7, when the moving frame 340 moves in the second direction D2, the second infrared lamp 542 operates to emit infrared radiation onto the other side of the separator 30, thereby melting the adhesive layer formed on the other side of the separator 30. When the second electrode 20 is disposed on the other side of the separator 30, the other side of the separator 30 and the second electrode 20 may be bonded.

The operations of the first infrared lamp 541 and the second infrared lamp 542 are not limited to such a configuration, and both the first infrared lamp 541 and the second infrared lamp 542 be simultaneously operating while the stacking process is performed.

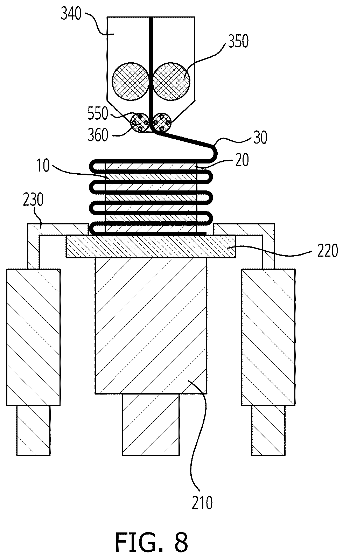

FIG. 8 shows the heating device in the apparatus for manufacturing an electrode assembly according to one or more embodiments of the present disclosure.

The heating device may include a heating wire heater 550 disposed on the guide roller 360 to heat the guide roller 360. In some embodiments, the heating wire heater 550 may be configured such that a metal material such as copper, formed in a coil shape or a tube shape, generates heat when power is applied.

In this manner, the guide roller 360 is heated to a certain temperature by the heating wire heater 550, the separator 30 passing through the guide roller 360 is heated, and the adhesive layer of the separator 30 may melt and be disposed on the stack table 220. As the first electrode 10 and the second electrode 20 are stacked with the separator 30 disposed in a zigzag configuration on the stack table 220 and disposed between the first electrode 10 and the second electrode 20, the first electrode 10 and the second electrode 20 may be adhered to the separator 30 by the molten adhesive layer.

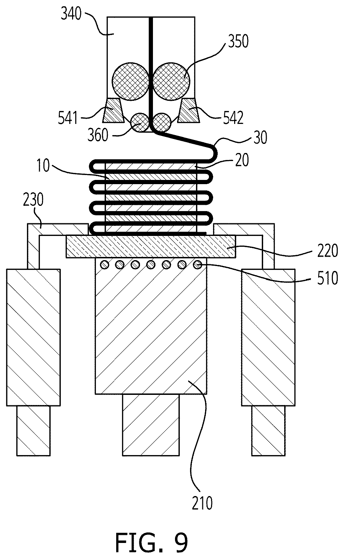

FIG. 9 shows the heating device shown in FIG. 2 and the heating device shown in FIG. 5 configured together in the apparatus for manufacturing an electrode assembly according to one or more embodiments of the present disclosure.

The heating device may include a heating wire heater 510 that is disposed on a base frame 210 and heats a stack table 220, a first infrared lamp 541 disposed on one side of a moving frame 340, and a second infrared lamp 542 disposed on the other side of the moving frame 340.

In this manner, the separator 30 is supplied in a zigzag configuration on the stack table 220, and the adhesive layer of the separator 30 may melt as the separator 30 is heated by the first infrared lamp 541 and the second infrared lamp 542 disposed on the moving frame 340. In addition, the stack table 220 is maintained in a heated state at a constant temperature by a heating wire heater 510 disposed on the base frame 210, so that the adhesive layer of the separator 30 disposed on the stack table 220 may melt. As the first electrode 10 and the second electrode 20 are stacked on the separator 30 with the melted adhesive layer, the first electrode 10 and the second electrode 20 may be stacked while being adhered to the separator 30.

When the heating wire heater 510 is disposed on the base frame 210 to heat the stack table 220, and the first electrode 10, the separator 30, and the second electrode 20 are stacked at a height greater than a predetermined height, the heat of the stack table 220 may not be transferred to the separator 30 stacked at the top.

Therefore, the first infrared lamp 541 and the second infrared lamp 542 are disposed on the moving frame 340, and even when the separator 30 is stacked to a certain height or higher, the first electrode 10 and the second electrode 20 may be stacked while being adhered to the separator 30.

Without being limited to the configuration shown in FIG. 9, the high-frequency induction heating device 520 or the infrared lamp 530 may be disposed on the base frame 210.

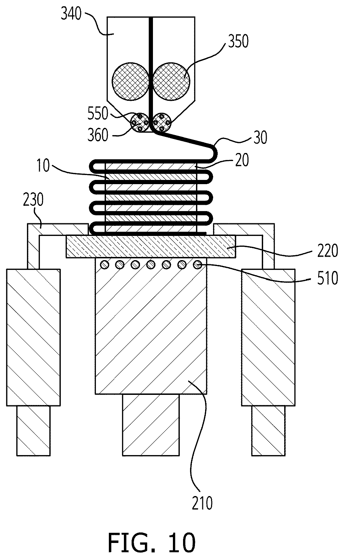

FIG. 10 shows the heating device shown in FIG. 2 and the heating device shown in FIG. 8 configured together in the apparatus for manufacturing an electrode assembly according to one or more embodiments of the present disclosure.

The heating device may include a heating wire heater 510 that is disposed on the base frame 210 and heats the stack table 220, and a heating wire heater 550 that is disposed on the guide roller 360 and heats the guide roller 360.

In this manner, the separator 30 may be supplied in a zigzag configuration on the stack table 220, and the guide roller 360 may be heated by the heating wire heater 550 disposed on the guide roller 360 to melt the adhesive layer of the separator 30 passing through the guide roller 360. In addition, the stack table 220 is maintained in a heated state at a constant temperature by a heating wire heater 510 disposed on the base frame 210, so that the adhesive layer of the separator 30 disposed on the stack table 220 may melt. As the first electrode 10 and the second electrode 20 are stacked on the separator 30 with the melted adhesive layer, the first electrode 10 and the second electrode 20 may be stacked while being adhered to the separator 30.

Without being limited to the configuration shown in FIG. 10, the high-frequency induction heating device 520 or the infrared lamp 530 may be disposed on the base frame 210.

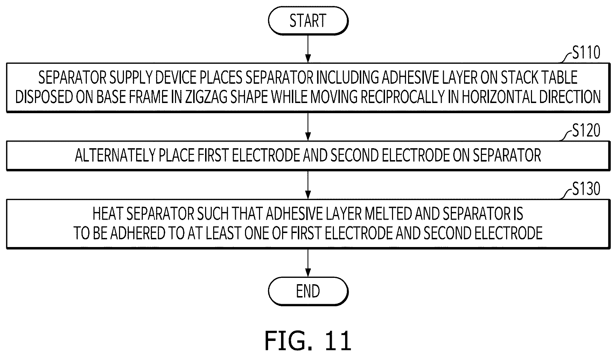

FIG. 11 is a flowchart showing a method for manufacturing an electrode assembly according to one or more embodiments of the present disclosure.

Referring to FIGS. 1 to 11, a method for manufacturing an electrode assembly may include a step (S110) of disposing, by the separator supply device 300, a separator 30 including an adhesive layer on a stack table 220 disposed on a base frame 210 in a zigzag configuration while reciprocating in a horizontal direction, a step (S120) of alternately disposing a first electrode 10 and a second electrode 20 on the separator 30, and a step (S130) of heating the separator 30 such that the adhesive layer is melted and the separator 30 is to be adhered to at least one of the first electrode 10 and the second electrode 20.

The step (S120) of alternately disposing the first electrode 10 and the second electrode 20 may include a step of disposing the first electrode 10 on the separator 30 disposed by the separator supply device 300 moving in a first direction D1, and a step of disposing the second electrode 20 on the separator 30 disposed by the separator supply device 300 moving in a second direction D2 opposite to the first direction D1.

The step of disposing the first electrode 10 on the separator 30 may include a step of, by the first electrode supply device 411, disposing the first electrode 10 on the separator 30 disposed on the stack table 220 in the first direction D1 when the separator supply device 300 moves in the first direction D1 and disposes the separator 30 on the stack table 220. In some embodiments, the step of disposing the first electrode 10 on the separator 30 may include a step of, by the first electrode supply device 411, suctioning the first electrode 10 disposed on the first electrode alignment table 412 or attaching it by magnetic force using, such as, an electromagnet, then moving the first electrode 10 to dispose it on the separator 30. The method for moving the first electrode 10 is not limited to such a configuration, and various moving methods may be applied.

The step of disposing the second electrode 20 on the separator 30 may include a step of, by the second electrode supply device 421, disposing the second electrode 20 on the separator 30 disposed on the stack table 220 in the second direction D2 when the separator supply device 300 moves in the second direction D2 and disposes the separator 30 on the stack table 220. In some embodiments, the step of disposing the second electrode 20 on the separator 30 may include a step of, by the second electrode supply device 421, suctioning the second electrode 20 disposed on the second electrode alignment table 422 or attaching it by magnetic force using, such as, an electromagnet, then moving the second electrode 20 to dispose it on the separator 30. The method for moving the second electrode 20 is not limited to such a configuration, and various moving methods may be applied.

The step of heating the separator (S130) may include a step of heating the stack table 220 by operating the heating wire heater 510 disposed on the base frame 210. The heating wire heater 510 may be configured such that a metal material such as copper, formed in a coil shape or a tube shape, generates heat when power is applied. Additionally, the stack table 220 may be heated by receiving heat from the heating wire heater 510. In some embodiments, the stack table 220 may include a metal material having high-thermal conductivity.

In this manner, the stack table 220 is heated to a constant temperature by the heating wire heater 510, and the first electrode 10 and the second electrode 20 are stacked with the separator 30 disposed therebetween while the separator 30 is disposed in a zigzag configuration on the stack table 220, the adhesive layer of the separator 30 melts by the heat of the stack table 220 and adheres to at least one of the first electrode 10 and the second electrode 20, thereby maintaining the stacked state.

The step of heating the separator (S130) may include a step of heating the stack table 220 by operating the high-frequency induction heating device 520 disposed on the base frame 210. The stack table 220 may be configured to be heated by the high-frequency induction heating device 520.

In this manner, the stack table 220 is heated to a constant temperature by the high-frequency induction heating device 520, and the first electrode 10 and the second electrode 20 are stacked with the separator 30 disposed therebetween while the separator 30 is disposed in a zigzag configuration on the stack table 220, the adhesive layer of the separator 30 melts by the heat of the stack table 220 and adheres to at least one of the first electrode 10 and the second electrode 20, thereby maintaining the stacked state.

The step of heating the separator (S130) may include a step of heating the stack table 220 by emitting infrared radiation to the stack table 220 by operating the infrared lamp 530 disposed on the base frame 210. The stack table 220 may be configured to be heated by the infrared lamp 530.

In this manner, the stack table 220 is heated to a constant temperature by the infrared lamp 530, and the first electrode 10 and the second electrode 20 are stacked with the separator 30 disposed therebetween while the separator 30 is disposed in a zigzag configuration on the stack table 220, the adhesive layer of the separator 30 melts by the heat of the stack table 220 and adheres to at least one of the first electrode 10 and the second electrode 20, thereby maintaining the stacked state.

In some embodiments, the stack table 220 may further include an infrared transmitting portion 221 including an infrared-transparent material to allow infrared radiation emitted from the infrared lamp 530 to be transmitted. The infrared transmitting portion 221 may include a transparent material such as glass or plastic.

In this manner, the separator 30 is disposed in a zigzag configuration on the stack table 220, and the first electrode 10 and the second electrode 20 are stacked with the separator 30 disposed therebetween, and the infrared radiation passing through the infrared transmitting portion 221 of the stack table 220 heats the separator 30, so that the adhesive layer of the separator 30 melts and adheres to at least one of the first electrode 10 and the second electrode 20, thereby maintaining the stacked state.

The step of heating the separator (S130) may include a step of heating the separator 30 disposed on the stack table 220 by emitting infrared radiation to the separator by operating the infrared lamp disposed on the moving frame 340. In some embodiments, the step of heating the separator (S130) may include a step of emitting infrared radiation onto the separator 30 by operating a first infrared lamp 541 disposed on one side of the moving frame 340 when the moving frame 340 moves in the first direction D1, and a step of emitting infrared radiation onto the separator 30 by operating a second infrared lamp 542 disposed on the other side of the moving frame 340 when the moving frame 340 moves in the second direction D2 opposite to the first direction D1.

The method of operating the first infrared lamp 541 and the second infrared lamp 542 is not limited to such a configuration, and the method of operating the first infrared lamp 541 and the second infrared lamp 542 may include a step of operating both the first infrared lamp 541 and the second infrared lamp 542 simultaneously while the stacking process is performed.

The step of heating the separator (S130) may include a step of heating the guide roller 360 by operating a heating wire heater 550 disposed on the guide roller 360. The heating wire heater 550 may be configured such that a metal material such as copper is formed in a coil shape or a tube shape and generates heat when power is applied.

In this manner, the guide roller 360 is heated to a certain temperature by the heating wire heater 550, and the separator 30 passing through the guide roller 360 is heated, so that the adhesive layer of the separator 30 may melt and may be disposed on the stack table 220. As the first electrode 10 and the second electrode 20 are stacked with the separator 30 disposed in a zigzag configuration on the stack table 220 between the first electrode 10 and the second electrode 20, the first electrode 10 and the second electrode 20 may be adhered to the separator 30 by the molten adhesive layer.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure.

### [DESCRIPTION OF NOTABLE REFERENCE SYMBOLS]

| | | | |
|---|---|---|---|
| 100: | apparatus | 210: | base frame |
| 220: | stack table | 300: | separator supply device |
| 310: | separator supply roller | 320: | supply frame |
| 330: | support roller | 340: | moving frame |
| 350: | nip roller | 360: | guide roller |
| 510: | heating wire heater | 520: | high-frequency induction heating device |
| 530: | infrared lamp | 541: | first infrared lamp |
| 542: | second infrared lamp | 550: | heating wire heater |

## Claims

1. An apparatus for manufacturing an electrode assembly, comprising:
a base frame (210);
a stack table (220) disposed on the base frame (210);
a separator supply device (300) configured to supply a separator (30) in a zigzag configuration to the stack table (220), the separator supply device (300) configured to reciprocate in a horizontal direction relative to the base frame (210), the separator (30) comprising an adhesive layer;
a first electrode supply device (411) configured to dispose a first electrode (10) on the separator (30) by a movement in a first direction (D1);
a second electrode supply device (421) configured to dispose a second electrode (20) on the separator (30) by movement in a second direction (D2) opposite to the first direction (D1); and
a heating device configured to heat the separator (30) to activate the adhesive layer such that the separator (30) adheres to the first electrode (10) or the second electrode (20).

2. The apparatus as claimed in claim 1, wherein the heating device comprises a heating wire heater (510) or a high-frequency induction heating device (520) disposed on the base frame (210).

3. The apparatus as claimed in claim 1 or 2, wherein the heating device comprises an infrared lamp (530) disposed on the base frame (210),
wherein the stack table (220) comprises an infrared transmitting portion (221) comprising an infrared-transparent material.

4. The apparatus as claimed in any one of claims 1 to 3, wherein the separator supply device (300) comprises:
a supply frame (320) disposed above the base frame (210);
a separator supply roller (310) configured to supply the separator (30) to the supply frame (320);
a support roller (330) disposed on the supply frame (320) and configured to support movement of the separator (30);
a moving frame (340) configured to reciprocate in the horizontal direction with respect to the base frame (210);
a nip roller (350) disposed on the moving frame (340) and configured to move the separator (30); and
a guide roller (360) disposed on the moving frame (340) and configured to supply the separator (30) from the nip roller (350) to the stack table (220).

5. The apparatus as claimed in claim 4, wherein the heating device comprises an infrared lamp (530) disposed on the moving frame (340),
wherein the infrared lamp comprises:
a first infrared lamp (541) disposed on one side of the moving frame (340); and
a second infrared lamp (542) disposed on another side of the moving frame (340).

6. The apparatus as claimed in claim 5, wherein the first infrared lamp (541) is configured to emit infrared radiation to the separator (30) in the case that the moving frame (340) moves in the first direction (D1),
wherein the second infrared lamp (542) is configured to emit infrared radiation to the separator (30) in the case that the moving frame (340) moves in the second direction (D2).

7. The apparatus as claimed in any one of claims 4 to 6, wherein the heating device comprises a heating wire heater (510) disposed on the guide roller (360).

8. A method for manufacturing an electrode assembly, comprising:
disposing a separator (30) in a zigzag configuration on a stack table (220) on a base frame (210) by a separator supply device (300) reciprocating in a horizontal direction relative to the base frame (210), the separator (30) comprising an adhesive layer;
alternately disposing a first electrode (10) and a second electrode (20) on the separator (30); and
heating the separator (30) to activate the adhesive layer such that the separator (30) adheres to the first electrode (10) and/or the second electrode (20).

9. The method as claimed in claim 8, wherein the alternately disposing comprises:
disposing the first electrode (10) on the separator (30) and moving the separator supply device (300) in a first direction (D1); and
disposing the second electrode (20) on the separator (30) and moving the separator supply device (300) in a second direction (D2) opposite to the first direction (D1).

10. The method as claimed in claim 8 or 9, wherein the heating comprises:
heating the stack table (220) by operating a heating wire heater (510) or a high-frequency induction heating device (520) disposed on the base frame (210).

11. The method as claimed in any one of claims 8 to 10, wherein the heating comprises:
heating the stack table (220) by emitting infrared radiation to the stack table (220) by operating an infrared lamp (530) disposed on the base frame (210).

12. The method as claimed in any one of claims 8 to 11, wherein the separator supply device (300) comprises:
a supply frame (320) disposed above the base frame (210);
a separator supply roller (310) configured to supply the separator (30) to the supply frame (320);
a support roller (330) disposed on the supply frame (320) and configured to support movement of the separator (30);
a moving frame (340) configured to reciprocate in the horizontal direction with respect to the base frame (210);
a nip roller (350) disposed on the moving frame (340) and configured to move the separator (30); and
a guide roller (360) disposed on the moving frame (340) and configured to supply the separator (30) from the nip roller (350) to the stack table (220).

13. The method as claimed in claim 12, wherein the heating comprises:
heating the separator (30) on the stack table (220) by emitting infrared radiation to the separator (30) by operating the infrared lamp (530) disposed on the moving frame (340).

14. The method as claimed in claim 12 or 13, wherein the heating comprises:
emitting infrared radiation to the separator (30) by operating a first infrared lamp (541) disposed on one side of the moving frame (340) when the moving frame (340) moves in the first direction (D1); and
emitting infrared radiation to the separator (30) by operating a second infrared lamp (542) on the other side of the moving frame (340) when the moving frame (340) moves in a second direction (D2) opposite to the first direction (D1).

15. The method as claimed in any one of claims 12 to 13, wherein the heating comprises:
heating the guide roller (360) by operating a heating wire heater (510) disposed on the guide roller (360).
